(19) **Europäisches Patentamt**
**European Patent Office**
**Office européen des brevets**

(11) **EP 3 879 479 B1**

(12) **EUROPEAN PATENT SPECIFICATION**

(45) Date of publication and mention
of the grant of the patent:
**21.01.2026 Bulletin 2026/04**

(21) Application number: **21160728.8**

(22) Date of filing: **04.03.2021**

(51) International Patent Classification (IPC):
***G06Q 30/02*** (2023.01)      ***G06Q 10/08*** (2024.01)

(52) Cooperative Patent Classification (CPC):
**G06Q 30/0202; G06Q 10/087; G06Q 30/0201**

(54) **SYSTEM AND METHOD FOR INVENTORY BASED PRODUCT DEMAND TRANSFER ESTIMATION IN RETAIL**

SYSTEM UND VERFAHREN ZUR INVENTARBASIERTEN PRODUKTBEDARFSTRANSFERSCHÄTZUNG IM EINZELHANDEL

SYSTÈME ET PROCÉDÉ D'ESTIMATION DE TRANSFERT DE DEMANDE DE PRODUIT BASÉE SUR L'INVENTAIRE DE DEMANDE DANS LA VENTE AU DÉTAIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2020 IN 202021010411**

(43) Date of publication of application:
**15.09.2021 Bulletin 2021/37**

(73) Proprietor: **Tata Consultancy Services Limited Maharashtra (IN)**

(72) Inventors:
• **RAMANAN, Sharadha**
  **600113 Chennai, Tamil Nadu (IN)**
• **THIRUNAVUKKARASU, Jeisobers**
  **600097 Chennai, Tamil Nadu (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-A1- 2019 087 841      US-A1- 2019 188 536**
**US-A1- 2019 295 032      US-A1- 2020 005 340**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

PRIORITY

The present application claims priority from Indian patent application No. 202021010411, filed on March 11, 2020.

TECHNICAL FIELD

The present subject matter relates in general to the field of estimating product demand transfer value, and in particular estimating product demand transfer value from attribute value level demand transfer values.

BACKGROUND OF THE INVENTION

In retail scenario, it is vital to understand and identify the attributes important to customers and how their preferences might influence the purchase decision if customer does not find their first choice in a store. Most of the time customers do not buy products, they buy a bundle of attributes. Product unavailability in a store may happen due to assortment decisions or out of stock situations. An assortment in retailer's context is the set of products going to be carried in a store for a period of time. Retailers periodically review the assortment for each category and deleting some products and adding others to take account of changes in customer demand over a period of time. A stock out is an event that causes inventory to be exhausted. The stock out may occur in a store due to various causes such as defective shelf replenishment practices, shortage of supplies from supplier, delay in transportation and so on.

Whenever, a product is unavailable in a store, the demand of the product will shift to other substitutable products. More precisely, the demand of an attribute value will transfer to another attribute value. Estimation of the demand transfer amount would be vital for retail strategy as it will facilitate inventory management decisions. The estimated demand transfer values enable to strategize inventory management system. Available approaches are considering assortment as the source of product unavailability but do not consider the out of stock conditions in the store while estimating the demand transfer of a product.

US 2020/005340 discloses a method and system for generating Customer Decision Tree (CDT) for an entity in accordance with an attribute value (AV) based demand transfer estimation for a product category using machine learning. The method includes aggregating very high volume of data associated with a plurality of AVs of a product category at a plurality of aggregation levels. Further, generating a data matrix, which represents data is a structured format for machine learning, at a predefined aggregation level for the product category and generating a prediction model with the data matrix to determine predicted AV sales for each AV at the predefined aggregation level. Further, optimizing the trained prediction model. Thereafter, generate the CDT utilizing the optimized prediction model, a Demand Transfer (DT) estimator, a scenario generator and a hierarchy generator. Machine learning based DT is more accurate, effectively generating more accurate CDT tree.

US 2019/188536 discloses a model of demand of a product that includes an optimized feature set. Embodiments receive sales history for the product and receive a set of relevant features for the product and designate a subset of the relevant features as mandatory features. From the sales history, embodiments form a training dataset and a validation dataset and randomly select from the set of relevant features one or more optional features. Embodiments include the selected optional features with the mandatory features to create a feature test set. Embodiments train an algorithm using the training dataset and the feature test set to generate a trained algorithm and calculate an early stopping metric using the trained algorithm and the validation dataset. When the early stopping metric is below a predefined threshold, the feature test set is the optimized feature set.

US 2019/295032 A1 discloses returns forecasting for a retail store inventory of one or more supply chain entities. Embodiments include receiving a current state of items in a supply chain network, receiving a sales time series and a returns time series, computing a returns forecast comprising an expected quantity of a particular product to be returned for a future time period using a sales forecast a and a transfer function estimated from the sales time series and the returns time series.

US 2019/087841 A1 discloses determining, using a processor, a total demand for one or more promotion tuples, identifying a current supply, wherein the current supply is identified in an instance in which the current supply is usable to satisfy the total demand, determining one or more demand gaps based on a difference between the total demand and the current supply, providing a first view in a lead dashboard, the first view comprising at least one of a total demand, current supply or one or more demand gaps, receiving a selection of one of a plurality of granularities of either a location or category, and refining the first view into a second view, the second view comprising additional granularity of at least one of a total demand, current supply or one or more demand gaps when compared to the first view.

## SUMMARY OF THE INVENTION

Embodiments of the present disclosure present unique data processing system and method as solutions to one or more of the above-mentioned demand transfer estimation problems recognized by the inventors in conventional systems. For example, in one embodiment, a processor-implemented method for product demand transfer estimation in retail using inventory data is provided.

The processor-implemented method includes receiving a plurality of data pertaining to each of one or more products from one or more predefined sources and aggregating historical sales data and inventory data of each of the one or more products received from a POS and a historical inventory database. Herein, the one or more attributes and corresponding a predefined value to each of the one or more attributes are integrated with POS and inventory. Further, the processor-implemented method includes determining an actual share of sales of each of the one or more attributes from the aggregated historical sales data and the inventory data of each of the one or more predefined products, determining a missing share of sales of at least one missing attribute value of the one or more predefined attribute values from the aggregated historical sales data, the historical inventory data of each of the one or more products and the product master data, and determining an expected share of each of the one or more predefined attribute values based on a sum of expected share of one or more products having the one or more attribute values using multiplicative model.

Furthermore, the processor-implemented method includes calculating an additional share of each of the one or more predefined attribute values based on the determined actual share of sales and expected share of sales of each of the one or more predefined attribute values. Herein, the underlying assumption is that the additional share of each identified attribute value is due to a transfer that has happened from the missed attribute values. Further, the processor-implemented method includes computing a demand transfer of the one or more predefined attribute values based on the calculated additional share and the missing share of sales. The demand transfer of each attribute value depends on share of missed attribute values. A demand transfer of each of the one or more products is estimated based on the computed estimated demand transfer of each of the one or more attribute values.

In another aspect, a system for product demand transfer estimation in retail is provided. The system includes at least one memory storing a plurality of instructions, and one or more hardware processors communicatively coupled with at least one memory, wherein one or more hardware processors are configured to execute one or more modules. Further, the system includes a receiving module configured to receive a plurality of data pertaining to one or more products having one or more predefined attributes from one or more predefined sources, and an aggregation module configured to aggregate sales data of each of the one or more products based on a historical sales data received from the POS.

Furthermore, the system includes an actual share determination module configured to determine an actual share of each of the one or more attribute values based on each of the one or more predefined products, and a missing share determination module configured to determine a missing share of sales of at least one missing attribute value of the one or more predefined attribute values from the aggregated historical sales data. An expected share determination module is configured to determine an expected share of each of the one or more predefined attribute values based on a sum of expected share of one or more products having the one or more attribute values using multiplicative model. An additional share calculation module is configured to calculate an additional share of each of the one or more predefined attribute values based on the determined actual share of sales and expected share of sales of each of the one or more predefined attribute values. Herein, the underlying assumption is that the additional share of each identified attribute values is due to a transfer that has happened from the missed attribute values. Further, a computing module of the system is configured to compute a demand transfer of the one or more predefined attribute values based on the calculated additional share and the missing share of sales. An estimation module is configured to estimate a demand transfer of each of the one or more products based on the computed demand transfer of each of the one or more predefined attribute values.

In yet another embodiment, a non-transitory computer readable medium storing one or more instructions which when executed by one or more processors on a system cause the one or more processors to perform the method is provided.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for product demand transfer estimation in retail according to some embodiments of the present disclosure.

FIG. 2 is a flow diagram illustrating product demand transfer estimation in retail in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

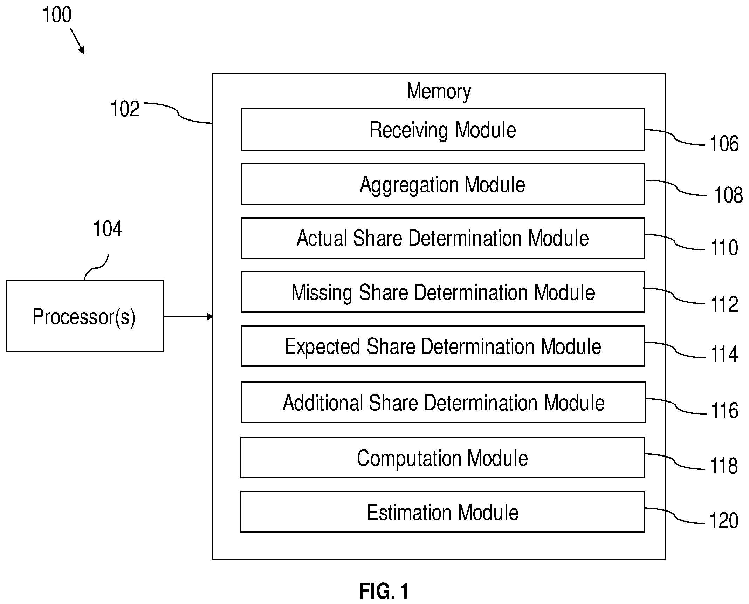

Referring now to the drawings, and more particularly to FIG. 1 through FIG. 2, where similar reference characters denote corresponding features consistently throughout the figures, there are shown preferred embodiments and these embodiments are described in the context of the following exemplary system and/or method.

The embodiments herein provide a system and method for product demand transfer estimation in retail. Demand transfer happens across one or more products within a category of substitutable products. Product level demand transfer indicates the amount of demand that is going to be transferred from the unavailable product to another product within the category. The system is configured to estimate product level demand transfer value based on the attributes values present in the one or more products considered. It is to be noted that an inventory availability is considered herein rather than assortment to ensure that the product is present or not for a particular point in time.

Referring FIG. 1, illustrating a system (100) for product demand transfer estimation in retail. In the preferred embodiment, the system (100) comprises at least one memory (102) with a plurality of instructions and one or more hardware processors (104) which are communicatively coupled with the at least one memory (102) to execute modules therein.

The hardware processor (104) may be implemented as one or more microprocessors, microcomputers, microcontrollers, digital signal processors, central processing units, state machines, logic circuitries, and/or any devices that manipulate signals based on operational instructions. Among other capabilities, the hardware processor (104) is configured to fetch and execute computer-readable instructions stored in the memory (102). Further, the system comprises a receiving module (106), an aggregation module (108), an actual share determination module (110), a missing share determination module (112), an expected share determination module (114), an additional share calculation module (116), a computation module (118) and an estimation module (120).

In the preferred embodiment of the disclosure, the receiving module (106) of the system (100) is configured to receive a plurality of data pertaining to one or more products from one or more predefined sources. Herein, the one or more predefined sources include an inventory database, a point-of-sale (POS) database, and a product master database. The POS includes historical sales data of the one or more products. Number of units sold for a product in a store for a day is considered as a measure of performance of sales of one or more products. The POS includes transaction level information and it is processed and aggregated at day or week level depending on the velocity of one or more products. The product master database provides information of one or more attributes of each of the one or more products. Each of the one or more attributes has a predefined attribute value. In one example, wherein a women's top comprises attributes such as brand, apparel size, color and design pattern, etc. Each attribute has predefined attribute values such as blue, green and red for color and small, medium, large for size of apparels.

In the preferred embodiment of the disclosure, the aggregation module (108) of the system (100) is configured to aggregate historical sales data of each of the one or more products based on a historical sales data received from the POS. It would be appreciated that the aggregated sales data is standardized based on a predefined unit and time period. The aggregated sales data of the POS, the historical inventory database and the product master database is integrated based on a predefined timestamp. It is to be noted that the integration facilitates to drive an attribute level metrics from a product metrics under product presence or absence in a store.

The inventory database comprises historical inventories of each of one or more products at store level. It indicates presence and absence of each of the one or more products in the store at a particular point in time. It would be appreciated that the aggregation for inventory is done at a predefined time period. The level of aggregation for inventory depends on the pattern of missing one or more products in the inventory as well as velocity of each of the one or more products. The POS and inventory are aggregated in a level such that they have similar level of aggregation.

In one example, wherein if the sale movement of one or more products within a category is fast, day level aggregation is followed. In contrast, if the sale movement of the one or more products are low, week level aggregation is followed. The aggregation enables to identify the buying behavior of customers with respect to inventory availability for a particular period of time.

It is to be noted that each of the one or more products will have different magnitude of sales units and it is standardized in such a way that the magnitude of each product is ranging from 0 to 1 and sum of standardized values of all products is equal to 1. Standardization is done at a store day level and it is done by considering each of the one or more products in a store for a particular day. Further, it is to be noted that the duration of historical data is one year from the latest period. The period may vary depending on nature of each product.

In the preferred embodiment of the disclosure, the actual share determination module (110) of the system (100) is configured to determine an actual share of sales of each of the one or more predefined attribute values from the aggregated historical sales data, the historical inventory data of each of the one or more products and the product master data. Actual share of each of the one or more products are calculated based on the historical sales and it indicates the past performance of the product and it is calculated for each store and each day. The sum of actual share of all products for a store in a particular day will come to one. The actual share of products facilitates to calculate attribute value level shares.

In the preferred embodiment of the disclosure, the missing share determination module (112) of the system (100) is configured to determine a missing share of sales of at least one missing attribute value of the one or more predefined attribute values from the aggregated historical sales data, the historical inventory data of each of the one or more products and the product master data. Wherein, the missing share of sales indicates a lost performance of each of one or more predefined attribute values of one or more products.

Each of the one or more products having an attribute value and present at a particular day are filtered and actual share of each of the one or more predefined products are summed up to get the actual share of each of the one or more attribute value. It is to be noted that the actual share of an attribute value is calculated for a predefined store and for a particular day. Each of the one or more products having an attribute value and are absent at a particular day are filtered and actual share of each of the one or more predefined products are summed up to get the actual share of each of the one or more attribute value which is missing for a particular store and for a particular day. It is specified as the missing share that comes from missing attributes.

In another example, wherein if there are three brands *A, B* and *C* for a mobile phone then the brand *A* actual share is calculated by summing up of that mobile share having the brand *A*. Similarly, the process is repeated for the brand *B* and the brand *C*. The sum of three brand shares will come to *1*. The actual share of each brand (i.e. *A, B* and *C*) indicates the business importance within the brand for the store on a particular day.

In the preferred embodiment of the disclosure, the expected share determination module (114) of the system (100) is configured to determine an expected share of each of the one or more attribute values. It would be appreciated that the expected share of each of the one or more attribute values could be arrived in many ways by considering business behavior. Herein, the expected share of each of the one or more attribute values is based on addition of expected share of all the products having the said attribute value. It is to be noted that the expected share of a product reflects the potential of the product and it is calculated by multiplying the actual share of each of one or more attribute values of each of one or more products and the approach is specified as multiplicative model. Herein, the underlying assumption is that sales of each of the one or more products is dependent on share of attribute values owned by the product and the effect of attribute values are independent of each other.

It is to be noted that the share of each of one or more attribute values is derived by summing average shares of one or more products having the said attribute value and it is done by considering similar stores and over a period of time and the measure reflects the potential of one or more attribute value. Average values of share of a product is derived by considering share of same product across similar retail stores.

It would be appreciated that the expected share of each of the one or more attribute values could be arrived in many ways by considering business behavior. One of the approaches is using multiplicative model as described in earlier sections. The other approaches could be by using calculation of attribute value at corporate level or at cluster level. The underlying principle is that when the sample size used for expected share calculation increases it explains population behavior in better ways. The attribute value share calculated using large number of stores will reflect expected share of the attribute value more accurately. In one example, corporate level attribute value share could be calculated by considering all the stores and could be used for expected share of attribute value. Similarly, calculated share of attribute value at cluster level could be used for expected share of attribute value. The cluster level attribute value share could be calculated by considering a group of stores having similar business characteristics. In one of the examples, demographic variables could be considered for forming cluster of stores.

In the preferred embodiment of the disclosure, the additional share determination module (116) of the system (100) is configured to calculate an additional share of each of the one or more attribute values and it is calculated by differencing the determined actual and expected share of each of the one or more predefined attribute values. Herein, the underlying assumption is that the additional share of each identified attribute values is due to the transfer that has happened from the missed attribute values.

In the preferred embodiment of the disclosure, the computation module (118) of the system (100) is configured to compute a demand transfer of the one or more predefined attribute values based on the calculated additional share and the missing share of sales. The demand transfer of each of the one or more predefined attribute values depends on missing share of sales of one or more products. To compute demand transfer based on one or more predefined attribute values the computation module follows:

$$\delta Y_{ikt} = \sum_{i \neq j}^{n} \beta_{ij} \delta Y_{jkt} + e_{ikt} \qquad (1)$$

Wherein, $\delta Y_{ikt}$ is an additional share of attribute value $i \in \{1, 2, .... N\}$ for the store $k \in \{1, 2, .... K\}$ in the day $t \in \{1, 2, .... T\}$;

$\beta_{ij}$ is the demand transfer value of attribute value $i$ that comes from attribute value $j$;

$\delta Y_{jkt}$ is the share of attribute value $j \in \{1, 2, .... N$ and $i \neq j\}$ which is missing for the store $k \in \{1, 2, .... K\}$ in the day $t \in \{1, 2, .... T\}$;

$e_{ikt}$ is the error associated with attribute value $i \in \{1, 2, .... N\}$ for the store $k \in \{1, 2, .... K\}$ in the day $t \in \{1, 2, .... T\}$.

In another example, wherein an underlying assumption is that an additional share of an attribute value is received from one or more attribute values which are missing during a particular day from a particular store. The required information is collected for all the stores and for all the days. The ideal duration of data is from the latest historical period as it will capture the latest demand transfer mechanism in better way. To estimate demand transfer value for an attribute value *A,* additional share of an attribute value *A* is mapped with the share of missing attribute values (*B* and *C*) of an attribute. It is repeated for all the stores and for all the days. Herein, a coefficient is estimated using general fitting technique such as Maximum Likelihood Estimation (MLE) method or ordinary least square method using additional share of an attribute value as dependent variable and the share that comes from missing attribute values as independent variables. The demand transfer happens from brand *B* to brand *A* is provided by one of the coefficients of the outcomes of fitting. Similarly, the demand transfer that happens from brand *C* to brand *A* is provided by second coefficient. The magnitude of coefficient indicates the demand that is going to be transferred from an attribute value to another attribute value particularly from the missed attribute value to the attribute value which is present in the store. The demand transfer value is specified as attribute value level demand transfer.

In the preferred embodiment of the disclosure, the estimation module (120) of the system (100) is configured to estimate a demand transfer of each of the one or more products based on the computed demand transfer of each of the one or more predefined attribute values.

Further, the product level demand transfer value is estimated from the attribute value demand transfer and it is based on the attribute values present in the two substitutable products. The two substitutable products are compared each other based on the attributes owned by them. If both the products have different attribute values, then demand transfer value of each attribute values are multiplied for estimation of demand transfer value of product. The underlying assumption is that product demand transfer is entirely depending on the attribute values and their transfer values owned by two products considered. Furthermore, the product level demand transfer is calculated based on:

$$D_{xy} = \prod_{k=1}^{m} \beta_{ijm} \qquad (2)$$

wherein, $D_{xy}$ is the demand transfer value of product $x$ that comes from product $y$; $\beta_{ijm}$ is the demand transfer value of attribute value $i$ that comes from attribute value $j$ of attribute $m \in \{1, 2, .... M\}$; those attributes that are having different attribute values between two products are considered.

In yet another example, there are two products having three attributes (m=3) namely color, brand and size. First product has the attribute values such as black, small size and brand A and the second product has the attribute values such as white, medium size and brand *A.* The demand transfer value of first product *'x'* that comes from the second product *'y'* is calculated as

$$D_{xy} = (\beta_{121} * \beta_{123}) \qquad (3)$$

wherein, $\beta_{121}$ is related to first attribute and it indicates the demand transfer value of black that comes from white; $\beta_{213}$ is related to third attribute and it indicates the demand transfer value of small size that comes from medium size. The second attribute 'Brand' is not considered for product demand transfer calculation as both products have the same attribute value i.e. Brand *A.*

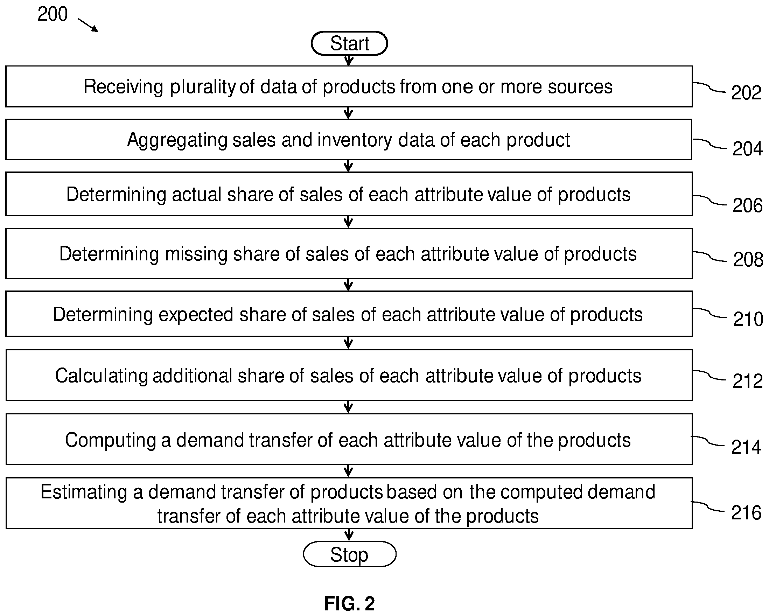

Referring FIG. 2, a flow chart to illustrates a processor-implemented method (200) for product demand transfer estimation. The method comprises one or more steps as follows.

Initially, at the step (202), receiving a plurality of data pertaining to one or more products from one or more predefined sources. Wherein, the each of the one or more products comprises one or more attributes and a predefined value corresponding to each of the one or more attributes. The one or more predefined sources include an inventory database, a point-of-sale (POS) database, and a product master database.

In the preferred embodiment of the disclosure, at the next step (204), aggregating the historical sales data and historical inventory data of each of the one or more products. The aggregated historical sales data is standardized based on a predefined unit and time period.

In the preferred embodiment of the disclosure, at the next step (206), determining an actual share of sales of each of the one or more predefined attribute values from the aggregated historical sales data, the historical inventory data of each of the one or more products and the product master data. Herein, the actual share of sales indicates a past performance of each of one or more predefined attribute values of one or more products.

In the preferred embodiment of the disclosure, at the next step (208), determining a missing share of sales of at least one missing attribute value of the one or more predefined attribute values from the aggregated historical sales data, the historical inventory data of each of the one or more products and the product master data. Wherein, the missing share of sales indicates a lost performance of each of one or more predefined attribute values of one or more products.

In the preferred embodiment of the disclosure, at the next step (210), determining an expected share of each of the one or more predefined attribute values based on a sum of expected share of one or more products having the one or more attribute values using multiplicative model.

In the preferred embodiment of the disclosure, at the next step (212), calculating an additional share of each of the one or more predefined attribute values based on the determined actual share of sales and expected share of sales of each of the one or more predefined attribute values. The additional share is calculated by differencing the determined actual and expected share of each of the one or more predefined attribute values. Wherein, the additional share of each identified attribute values is based on the transfer that has happened from the missed attribute values of an attribute.

In the preferred embodiment of the disclosure, at the next step (214), computing a demand transfer of the one or more predefined attribute values based on the calculated additional share and the missing share of sales. It is to be noted that the demand transfer of each of the one or more predefined attribute values depends on missing share of sales.

In the preferred embodiment of the disclosure, at the last step (216), estimating a demand transfer of each of the one or more products based on the computed demand transfer of each of the one or more predefined attribute values. It would be appreciated that product level demand transfer value is derived based on the attribute values present in the two substitutable products. If both the products have different attribute values for two or more attributes, then demand transfer value of each attribute value are multiplied for derivation of demand transfer value of product. The underlying assumption is that product demand transfer is entirely depending on the attribute values owned by two products considered.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of demand transfer whenever a product is unavailable, the demand of the product will shift to other substitutable products. The embodiments thus provide a product level demand transfer value. The product level demand transfer indicates the amount of demand that is going to be transferred from an unavailable product to another product within a category.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

**1.** A processor-implemented method (200) to estimate a demand transfer of one or more products, comprising:

receiving (202), via one or more hardware processors, a plurality of data pertaining to the one or more products from one or more predefined sources, wherein each of the one or more products comprises one or more attributes and a predefined value corresponding to each of the one or more attributes, wherein the plurality of data include a historical sales data from a point-of-sale, a historical inventory data of one or more products, and a product master data, wherein a point-of-sale, POS, database comprise transaction level information, is processed and aggregated at a day level or a week level depending on a velocity of the one or more products sold;

aggregating (204), via one or more hardware processors, the historical sales data and historical inventory data of each of the one or more products, wherein the aggregated historical sales data is standardized based on a predefined unit and time period, wherein the aggregation of the historical sales data enables identification of buying behaviour of one or more customers based on an inventory availability;

determining (206), via one or more hardware processors, an actual share of sales of each of the one or more predefined attribute values from the aggregated historical sales data, the historical inventory data of each of the one or more products and the product master data, wherein the actual share of sales indicates performance of each of one or more predefined attribute values of one or more products;

determining (208), via one or more hardware processors, a missing share of sales of at least one missing attribute value of the one or more predefined attribute values from the aggregated historical sales data, the historical inventory data of each of the one or more products and the product master data, wherein the missing share of sales indicates a lost performance of each of one or more predefined attribute values of one or more products, and the missing share of the sales provide a lost performance with respect to an inventory unavailability for a predefined period of time;

determining (210), via one or more hardware processors, an expected share of each of the one or more predefined attribute values based on a sum of expected share of one or more products having the one or more attribute values using multiplicative model;

calculating (212), via one or more hardware processors, an additional share of each of the one or more predefined attribute values based on the determined actual share of sales and expected share of sales of each of the one or more predefined attribute values, wherein the additional share of each of the one or more attribute values is based on a demand transfer from at least one missed attribute value of one or more predefined attribute values;

computing (214), via one or more hardware processors, a demand transfer of the one or more predefined attribute values based on the calculated additional share and the missing share of sales, wherein the demand transfer of each of the one or more predefined attribute values depends on missing share of sales, wherein the demand transfer is calculated by:

$$\delta Y_{ikt} = \sum_{i \neq j}^{n} \beta_{ij} \delta Y_{jkt} + e_{ikt}$$

wherein, $\delta Y_{ikt}$ is an additional share of attribute value $i \in \{1, 2, .... N\}$ for a store $k \in \{1, 2, .... K\}$ in a day $t \in \{1, 2, .... T\}$,

$\beta_{ij}$ is the demand transfer value of attribute value $i$ that comes from attribute value $j$,

$\delta Y_{jkt}$ is the share of attribute value $j \in \{1, 2, .... N$ and $i \neq j\}$ which is missing for the store $k \in \{1, 2, .... K\}$ in the day $t \in \{1, 2, .... T\}$, and

$e_{ikt}$ is an error associated with attribute value $i \in \{1, 2, .... N\}$ for the store $k \in \{1, 2, .... K\}$ in the day $t \in \{1, 2, .... T\}$; and estimating (216), via one or more hardware processors, a demand transfer of each of the one or more products based on the computed demand transfer of each of the one or more predefined attribute values, wherein the demand transfer of each of the one or more products is calculated by:

$$D_{xy} = \prod_{k=1}^{m} \beta_{ijm}$$

wherein, $D_{xy}$ is the demand transfer value of product $x$ that comes from product $y$,

$\beta_{ijm}$ is the demand transfer value of attribute value $i$ that comes from attribute value $j$ of attribute m $\in \{1, 2, .... M\}$, and

wherein the demand transfer of each of the one or more products is derived based on the attribute values present in two substitutable products.

2. The processor-implemented method (200) of claim 1, wherein the one or more predefined sources include an inventory database, the POS database, and a product master database.

3. The processor-implemented method (200) of claim 1, wherein the one or more attributes include brand and color of the one or more products.

4. The processor implemented method (200) of claim 1, wherein the actual share of sales of the one or more products is dependent on one or more predefined attribute values owned by each of the one or more products.

5. A system (100) for estimating a demand transfer of one or more products comprising:

at least one memory (102) storing instructions; and
one or more hardware processors (104) coupled to the memory via the one or more communication interfaces, wherein the one or more hardware processors are configured by the instructions to execute one or more modules:

a receiving module (106) configured to receive a plurality of data pertaining to the one or more products from one or more predefined sources, wherein each of the one or more products comprises one or more attributes and a predefined value corresponding to each of the one or more attributes, wherein the plurality of data include a historical sales data from a point-of-sale, a historical inventory data of one or more products and a product master data, wherein a point-of-sale, POS, database comprise transaction level information, is processed and aggregated at a day level or a week level depending on a velocity of the one or more products sold;
an aggregation module (108) configured to aggregate the historical sales data and historical inventory data of each of the one or more products, wherein the aggregated historical sales data is standardized based on a predefined unit and time period, wherein the aggregation of the historical sales data enables identification of buying behaviour of one or more customers based on an inventory availability;
an actual share determination module (110) configured to determine an actual share of sales of each of the one or more predefined attribute values from the aggregated historical sales data, the historical inventory data of each of the one or more products and the product master data, wherein the actual share of sales indicates a past performance of each of one or more predefined attribute values of one or more products;
a missing share determination module (112) configured to determine a missing share of sales of at least one missing attribute value of the one or more predefined attribute values from the aggregated historical sales data, the historical inventory data of each of the one or more products and the product master data, wherein the missing share of sales indicates a lost performance of each of one or more predefined attribute values of one or more products, and the missing share of the sales provide a lost performance with respect to an inventory unavailability for a predefined period of time;
an expected share determination module (114) configured to determine an expected share of each of the one or more predefined attribute values based on a sum of expected share of one or more products having the one or more attribute values using multiplicative model;
an additional share calculation module (116) configured to calculate an additional share of each of the one or more predefined attribute values based on the determined actual share of sales and expected share of sales of each of the one or more predefined attribute values, wherein the additional share of each of the one or more attribute values is based on a demand transfer from at least one missed attribute value of one or more predefined attribute values;

a computation module (118) configured to compute a demand transfer of the one or more predefined attribute values based on the calculated additional share and the missing share of sales, wherein the demand transfer of each of the one or more predefined attribute values depends on missing share of sales, wherein the demand transfer is calculated by:

$$\delta Y_{ikt} = \sum_{i \ne j}^{n} \beta_{ij} \delta Y_{jkt} + e_{ikt}$$

wherein, $\delta Y_{ikt}$ is an additional share of attribute value $i \in \{1, 2, .... \text{N}\}$ for a store $k \in \{1, 2, .... \text{K}\}$ in a day $t \in \{1, 2, .... \text{T}\}$,

$\beta_{ij}$ is the demand transfer value of attribute value $i$ that comes from attribute value $j$,

$\delta Y_{jkt}$ is the share of attribute value $j \in \{1, 2, .... \text{N} \text{ and } i \ne j\}$ which is missing for the store $k \in \{1, 2, .... \text{K}\}$ in the day $t \in \{1, 2, .... \text{T}\}$, and

$e_{ikt}$ is an error associated with attribute value $i \in \{1, 2, .... \text{N}\}$ for the store $k \in \{1, 2, .... \text{K}\}$ in the day $t \in \{1, 2, .... \text{T}\}$; and

an estimation module (120) configured to estimate a demand transfer of each of the one or more products based on the computed demand transfer of each of the one or more predefined attribute values, wherein the demand transfer of each of the one or more products is calculated by:

$$D_{xy} = \prod_{k=1}^{m} \beta_{ijm}$$

wherein, $D_{xy}$ is the demand transfer value of product $x$ that comes from product $y$,

$\beta_{ijm}$ is the demand transfer value of attribute value $i$ that comes from attribute value $j$ of attribute m $\in \{1, 2, .... \text{M}\}$, and

wherein the demand transfer of each of the one or more products is derived based on the attribute values present in two substitutable products.

6. The system (100) of claim 5, wherein the one or more predefined sources include an inventory database, the POS database, and a product master database.

7. The system (100) of claim 5, wherein the one or more attributes include brand and color of the one or more products.

8. The system (100) of claim 5, wherein the actual share of sales of the one or more products is dependent on one or more predefined attribute values owned by each of the one or more products.

9. A non-transitory computer readable medium storing one or more instructions which when executed by one or more processors on a system, cause the one or more processors to perform method comprising:

receiving a plurality of data pertaining to the one or more products from one or more predefined sources, wherein each of the one or more products comprises one or more attributes and a predefined value corresponding to each of the one or more attributes, wherein the plurality of data include a historical sales data from a point-of-sale, a historical inventory data of one or more products and a product master data, wherein a point-of-sale, POS, database comprise transaction level information, is processed and aggregated at a day level or a week level depending on a velocity of the one or more products sold;

aggregating the historical sales data and historical inventory data of each of the one or more products, wherein the aggregated historical sales data is standardized based on a predefined unit and time period, wherein the aggregation of the historical sales data enables identification of buying behaviour of one or more customers based on an inventory availability;

determining an actual share of sales of each of the one or more predefined attribute values from the aggregated historical sales data, the historical inventory data of each of the one or more products and the product master data, wherein the actual share of sales indicates performance of each of one or more predefined attribute values of one or more products;

determining a missing share of sales of at least one missing attribute value of the one or more predefined attribute values from the aggregated historical sales data, the historical inventory data of each of the one or more products and the product master data, wherein the missing share of sales indicates a lost performance of each of one or more predefined attribute values of one or more products, and the missing share of the sales provide a lost performance with respect to an inventory unavailability for a predefined period of time;

determining an expected share of each of the one or more predefined attribute values based on a sum of expected share of one or more products having the one or more attribute values using multiplicative model;

calculating an additional share of each of the one or more predefined attribute values based on the determined actual share of sales and expected share of sales of each of the one or more predefined attribute values, wherein the additional share of each of the one or more attribute values is based on a demand transfer from at least one missed attribute value of one or more predefined attribute values;

computing a demand transfer of the one or more predefined attribute values based on the calculated additional share and the missing share of sales, wherein the demand transfer of each of the one or more predefined attribute values depends on missing share of sales, wherein the demand transfer is calculated by:

$$\delta Y_{ikt} = \sum_{i \neq j}^{n} \beta_{ij} \delta Y_{jkt} + e_{ikt}$$

wherein, $\delta Y_{ikt}$ is an additional share of attribute value $i \in \{1, 2, .... N\}$ for a store $k \in \{1, 2, .... K\}$ in a day $t \in \{1, 2, .... T\}$,

$\beta_{ij}$ is the demand transfer value of attribute value $i$ that comes from attribute value $j$,

$\delta Y_{jkt}$ is the share of attribute value $j \in \{1, 2, .... N$ and $i \neq j\}$ which is missing for the store $k \in \{1, 2, .... K\}$ in the day $t \in \{1, 2, .... T\}$, and

$e_{ikt}$ is an error associated with attribute value $i \in \{1, 2, .... N\}$ for the store $k \in \{1, 2, .... K\}$ in the day $t \in \{1, 2, .... T\}$;

and estimating a demand transfer of each of the one or more products based on the computed demand transfer of each of the one or more predefined attribute values, wherein the demand transfer of each of the one or more products is calculated by:

$$D_{xy} = \prod_{k=1}^{m} \beta_{ijm}$$

wherein, $D_{xy}$ is the demand transfer value of product $x$ that comes from product $y$,

$\beta_{ijm}$ is the demand transfer value of attribute value $i$ that comes from attribute value $j$ of attribute m $\in \{1, 2, .... M\}$, and

wherein the demand transfer of each of the one or more products is derived based on the attribute values present in two substitutable products.

## Patentansprüche

1. Prozessorimplementiertes Verfahren (200) zum Schätzen einer Nachfrageübertragung eines oder mehrerer Produkte, umfassend:

   Empfangen (202), über einen oder mehrere Hardwareprozessoren, einer Mehrzahl von Daten, die sich auf das eine oder die mehreren Produkte beziehen, von einer oder mehreren vordefinierten Quellen, wobei jedes des einen oder der mehreren Produkte ein oder mehrere Attribute und einen vordefinierten Wert umfasst, der jedem des einen oder der mehreren Attribute entspricht, wobei die Mehrzahl von Daten historische Verkaufsdaten von einem Verkaufspunkt, historische Bestandsdaten eines oder mehrerer Produkte und Produktmasterdaten beinhaltet, wobei eine Verkaufspunkt- (Point of Sale), POS-, Datenbank Transaktionsebeneninformationen umfasst, die auf einer Tagesebene oder einer Wochenebene in Abhängigkeit von einer Geschwindigkeit des einen oder der mehreren verkauften Produkte verarbeitet und aggregiert werden;
   Aggregieren (204), über einen oder mehrere Hardwareprozessoren, der historischen Verkaufsdaten und historischen Bestandsdaten jedes des einen oder der mehreren Produkte, wobei die aggregierten historischen Verkaufsdaten basierend auf einer vordefinierten Einheit und einem vordefinierten Zeitraum standardisiert werden, wobei die Aggregation der historischen Verkaufsdaten die Identifizierung des Kaufverhaltens eines oder mehrerer Kunden basierend auf einer Bestandsverfügbarkeit ermöglicht;

Bestimmen (206), über einen oder mehrere Hardwareprozessoren, eines tatsächlichen Verkaufsanteils jedes des einen oder der mehreren vordefinierten Attributwerte aus den aggregierten historischen Verkaufsdaten, den historischen Bestandsdaten jedes des einen oder der mehreren Produkte und den Produktmasterdaten, wobei der tatsächliche Verkaufsanteil die Leistung jedes des einen oder der mehreren vordefinierten Attributwerte eines oder mehrerer Produkte angibt;

Bestimmen (208), über einen oder mehrere Hardwareprozessoren, eines fehlenden Verkaufsanteils mindestens eines fehlenden Attributwerts des einen oder der mehreren vordefinierten Attributwerte aus den aggregierten historischen Verkaufsdaten, den historischen Bestandsdaten jedes des einen oder der mehreren Produkte und den Produktmasterdaten, wobei der fehlende Verkaufsanteil eine verlorene Leistung jedes des einen oder der mehreren vordefinierten Attributwerte eines oder mehrerer Produkte angibt und der fehlende Verkaufsanteil eine verlorene Leistung in Bezug auf eine Nichtverfügbarkeit des Bestands für einen vordefinierten Zeitraum bereitstellt;

Bestimmen (210), über einen oder mehrere Hardwareprozessoren, eines erwarteten Anteils jedes des einen oder der mehreren vordefinierten Attributwerte basierend auf einer Summe des erwarteten Anteils eines oder mehrerer Produkte mit dem einen oder den mehreren Attributwerten unter Verwendung eines multiplikativen Modells;

Berechnen (212), über einen oder mehrere Hardwareprozessoren, eines zusätzlichen Anteils jedes des einen oder der mehreren vordefinierten Attributwerte basierend auf dem bestimmten tatsächlichen Verkaufsanteil und dem erwarteten Verkaufsanteil jedes des einen oder der mehreren vordefinierten Attributwerte, wobei der zusätzliche Anteil jedes des einen oder der mehreren Attributwerte auf einer Nachfrageübertragung von mindestens einem verpassten Attributwert eines oder mehrerer vordefinierter Attributwerte basiert;

Berechnen (214), über einen oder mehrere Hardwareprozessoren, einer Nachfrageübertragung des einen oder der mehreren vordefinierten Attributwerte basierend auf dem berechneten zusätzlichen Anteil und dem fehlenden Verkaufsanteil, wobei die Nachfrageübertragung jedes des einen oder der mehreren vordefinierten Attributwerte von dem fehlenden Verkaufsanteil abhängt, wobei die Nachfrageübertragung berechnet wird durch:

$$\delta Y_{ikt} = \sum_{i \neq j}^{n} \beta_{ij} \delta Y_{jkt} + e_{ikt}$$

wobei $\delta Y_{ikt}$ ein zusätzlicher Anteil des Attributwerts $i \in \{1, 2, .... N\}$ für einen Laden $k \in \{1, 2, .... K\}$ an einem Tag $t \in \{1, 2, .... T\}$ ist,

$\beta_{ij}$ der Nachfrageübertragungswert des Attributwerts $i$ ist, der von dem Attributwert $j$ kommt,

$\delta Y_{jkt}$ der Anteil des Attributwerts $j \in \{1, 2, .... N$ und $i \neq j\}$ ist, der für den Laden $k \in \{1, 2, .... K\}$ an dem Tag $t \in \{1, 2, .... T\}$ fehlt, und

$e_{ikt}$ ein Fehler ist, der mit dem Attributwert $i \in \{1, 2, .... N\}$ für den Laden $k \in \{1, 2, .... K\}$ an dem Tag $t \in \{1, 2, .... T\}$ verbunden ist; und

Schätzen (216), über einen oder mehrere Hardwareprozessoren, einer Nachfrageübertragung jedes des einen oder der mehreren Produkte basierend auf der berechneten Nachfrageübertragung jedes des einen oder der mehreren vordefinierten Attributwerte, wobei die Nachfrageübertragung jedes des einen oder der mehreren Produkte berechnet wird durch:

$$D_{xy} = \prod_{k=1}^{m} \beta_{ijm}$$

wobei $D_{xy}$ der Nachfrageübertragungswert des Produkts $x$ ist, der von dem Produkt $y$ kommt,

$\beta_{ijm}$ der Nachfrageübertragungswert des Attributwerts $i$ ist, der von dem Attributwert $j$ des Attributs $m \in \{1, 2, .... M\}$ kommt, und

wobei die Nachfrageübertragung jedes des einen oder der mehreren Produkte basierend auf den Attributwerten abgeleitet wird, die in zwei substituierbaren Produkten vorhanden sind.

**2.** Prozessorimplementiertes Verfahren (200) nach Anspruch 1, wobei die eine oder die mehreren vordefinierten Quellen eine Bestandsdatenbank, die POS-Datenbank und eine Produktmasterdatenbank beinhalten.

**3.** Prozessorimplementiertes Verfahren (200) nach Anspruch 1, wobei das eine oder die mehreren Attribute Marke und Farbe des einen oder der mehreren Produkte beinhalten.

**4.** Prozessorimplementiertes Verfahren (200) nach Anspruch 1, wobei der tatsächliche Verkaufsanteil des einen oder der mehreren Produkte von einem oder mehreren vordefinierten Attributwerten abhängt, die jedem des einen oder der mehreren Produkte gehören.

**5.** System (100) zum Schätzen einer Nachfrageübertragung eines oder mehrerer Produkte, umfassend: mindestens einen Speicher (102), der Anweisungen speichert; und einen oder mehrere Hardwareprozessoren (104), die über die eine oder die mehreren Kommunikationsschnittstellen mit dem Speicher gekoppelt sind, wobei der eine oder die mehreren Hardwareprozessoren durch die Anweisungen konfiguriert sind, um ein oder mehrere Module auszuführen:

ein Empfangsmodul (106), das konfiguriert ist, um eine Mehrzahl von Daten zu empfangen, die sich auf das eine oder die mehreren Produkte beziehen, von einer oder mehreren vordefinierten Quellen, wobei jedes des einen oder der mehreren Produkte ein oder mehrere Attribute und einen vordefinierten Wert umfasst, der jedem des einen oder der mehreren Attribute entspricht, wobei die Mehrzahl von Daten historische Verkaufsdaten von einem Verkaufspunkt, historische Bestandsdaten eines oder mehrerer Produkte und Produktmasterdaten beinhaltet, wobei eine Verkaufspunkt- (Point of Sale), POS-, Datenbank Transaktionsebeneninformationen umfasst, die auf einer Tagesebene oder einer Wochenebene in Abhängigkeit von einer Geschwindigkeit des einen oder der mehreren verkauften Produkte verarbeitet und aggregiert werden;

ein Aggregationsmodul (108), das konfiguriert ist, um die historischen Verkaufsdaten und historischen Bestandsdaten jedes des einen oder der mehreren Produkte zu aggregieren, wobei die aggregierten historischen Verkaufsdaten basierend auf einer vordefinierten Einheit und einem vordefinierten Zeitraum standardisiert werden, wobei die Aggregation der historischen Verkaufsdaten die Identifizierung des Kaufverhaltens eines oder mehrerer Kunden basierend auf einer Bestandsverfügbarkeit ermöglicht;

ein tatsächliches Anteilsbestimmungsmodul (110), das konfiguriert ist, um einen tatsächlichen Verkaufsanteil jedes des einen oder der mehreren vordefinierten Attributwerte aus den aggregierten historischen Verkaufsdaten, den historischen Bestandsdaten jedes des einen oder der mehreren Produkte und den Produktmasterdaten zu bestimmen, wobei der tatsächliche Verkaufsanteil eine vergangene Leistung jedes des einen oder der mehreren vordefinierten Attributwerte eines oder mehrerer Produkte angibt;

ein fehlendes Anteilsbestimmungsmodul (112), das konfiguriert ist, um einen fehlenden Verkaufsanteil mindestens eines fehlenden Attributwerts des einen oder der mehreren vordefinierten Attributwerte aus den aggregierten historischen Verkaufsdaten, den historischen Bestandsdaten jedes des einen oder der mehreren Produkte und den Produktmasterdaten zu bestimmen, wobei der fehlende Verkaufsanteil eine verlorene Leistung jedes des einen oder der mehreren vordefinierten Attributwerte eines oder mehrerer Produkte angibt und der fehlende Verkaufsanteil eine verlorene Leistung in Bezug auf eine Nichtverfügbarkeit des Bestands für einen vordefinierten Zeitraum bereitstellt;

ein erwartetes Anteilsbestimmungsmodul (114), das konfiguriert ist, um einen erwarteten Anteil jedes des einen oder der mehreren vordefinierten Attributwerte basierend auf einer Summe des erwarteten Anteils eines oder mehrerer Produkte mit dem einen oder den mehreren Attributwerten unter Verwendung eines multiplikativen Modells zu bestimmen;

ein zusätzliches Anteilsberechnungsmodul (116), das konfiguriert ist, um einen zusätzlichen Anteil jedes des einen oder der mehreren vordefinierten Attributwerte basierend auf dem bestimmten tatsächlichen Verkaufsanteil und dem erwarteten Verkaufsanteil jedes des einen oder der mehreren vordefinierten Attributwerte zu berechnen, wobei der zusätzliche Anteil jedes des einen oder der mehreren Attributwerte auf einer Nachfrageübertragung von mindestens einem verpassten Attributwert eines oder mehrerer vordefinierter Attributwerte basiert;

ein Berechnungsmodul (118), das konfiguriert ist, um eine Nachfrageübertragung des einen oder der mehreren vordefinierten Attributwerte basierend auf dem berechneten zusätzlichen Anteil und dem fehlenden Verkaufsanteil zu berechnen, wobei die Nachfrageübertragung jedes des einen oder der mehreren vordefinierten Attributwerte von dem fehlenden Verkaufsanteil abhängt, wobei die Nachfrageübertragung berechnet wird durch:

$$\delta Y_{ikt} = \sum_{i \neq j}^{n} \beta_{ij} \delta Y_{jkt} + e_{ikt}$$

wobei $\delta Y_{ikt}$ ein zusätzlicher Anteil des Attributwerts $i \in \{1, 2, .... N\}$ für einen Laden $k \in \{1, 2, .... K\}$ an einem Tag $t \in \{1, 2, .... T\}$ ist,

$\beta_{ij}$ der Nachfrageübertragungswert des Attributwerts $i$ ist, der von dem Attributwert $j$ kommt,

$\delta Y_{jkt}$ der Anteil des Attributwerts $j \in \{1, 2, .... N$ und $i \neq j\}$ ist, der für den Laden $k \in \{1, 2, .... K\}$ an dem Tag $t \in \{1, 2, .... T\}$ fehlt, und

$e_{ikt}$ ein Fehler ist, der mit dem Attributwert $i \in \{1, 2, .... N\}$ für den Laden $k \in \{1, 2, .... K\}$ an dem Tag $t \in \{1, 2, .... T\}$ verbunden ist; und

ein Schätzmodul (120), das konfiguriert ist, um eine Nachfrageübertragung von jedem des einen oder der mehreren Produkte basierend auf der berechneten Nachfrageübertragung von jedem des einen oder der mehreren vordefinierten Attributwerte zu schätzen, wobei die Nachfrageübertragung von jedem des einen oder der mehreren Produkte berechnet wird durch:

$$D_{xy} = \prod_{k=1}^{m} \beta_{ijm}$$

wobei $D_{xy}$ der Nachfrageübertragungswert des Produkts $x$ ist, der von dem Produkt $y$ kommt,

$\beta_{ijm}$ der Nachfrageübertragungswert des Attributwerts $i$ ist, der von dem Attributwert $j$ des Attributs m $\in \{1, 2, .... M\}$ kommt, und

wobei die Nachfrageübertragung von jedem des einen oder der mehreren Produkte basierend auf den Attributwerten abgeleitet wird, die in zwei substituierbaren Produkten vorhanden sind.

6. System (100) nach Anspruch 5, wobei die eine oder die mehreren vordefinierten Quellen eine Bestandsdatenbank, die POS-Datenbank und eine Produktmasterdatenbank beinhalten.

7. System (100) nach Anspruch 5, wobei das eine oder die mehreren Attribute Marke und Farbe des einen oder der mehreren Produkte beinhalten.

8. System (100) nach Anspruch 5, wobei der tatsächliche Verkaufsanteil des einen oder der mehreren Produkte von einem oder mehreren vordefinierten Attributwerten abhängt, die jedem des einen oder der mehreren Produkte gehören.

9. Nichtflüchtiges computerlesbares Medium, das eine oder mehrere Anweisungen speichert, die, wenn sie von einem oder mehreren Prozessoren auf einem System ausgeführt werden, den einen oder die mehreren Prozessoren veranlassen, ein Verfahren durchzuführen, umfassend:

Empfangen einer Mehrzahl von Daten, die sich auf das eine oder die mehreren Produkte beziehen, von einer oder mehreren vordefinierten Quellen, wobei jedes des einen oder der mehreren Produkte ein oder mehrere Attribute und einen vordefinierten Wert umfasst, der jedem des einen oder der mehreren Attribute entspricht, wobei die Mehrzahl von Daten historische Verkaufsdaten von einem Verkaufspunkt, historische Bestandsdaten eines oder mehrerer Produkte und Produktmasterdaten beinhaltet, wobei eine Verkaufspunkt- (Point of Sale), POS-, Datenbank Transaktionsebeneninformationen umfasst, die auf einer Tagesebene oder einer Wochenebene in Abhängigkeit von einer Geschwindigkeit des einen oder der mehreren verkauften Produkte verarbeitet und aggregiert werden;

Aggregieren der historischen Verkaufsdaten und historischen Bestandsdaten jedes des einen oder der mehreren Produkte, wobei die aggregierten historischen Verkaufsdaten basierend auf einer vordefinierten Einheit und einem vordefinierten Zeitraum standardisiert werden, wobei die Aggregation der historischen Verkaufsdaten die Identifizierung des Kaufverhaltens eines oder mehrerer Kunden basierend auf einer Bestandsverfügbarkeit ermöglicht;

Bestimmen eines tatsächlichen Verkaufsanteils jedes des einen oder der mehreren vordefinierten Attributwerte aus den aggregierten historischen Verkaufsdaten, den historischen Bestandsdaten jedes des einen oder der mehreren Produkte und den Produktmasterdaten, wobei der tatsächliche Verkaufsanteil die Leistung jedes des einen oder der mehreren vordefinierten Attributwerte eines oder mehrerer Produkte angibt;

Bestimmen eines fehlenden Verkaufsanteils mindestens eines fehlenden Attributwerts des einen oder der mehreren vordefinierten Attributwerte aus den aggregierten historischen Verkaufsdaten, den historischen Bestandsdaten jedes des einen oder der mehreren Produkte und den Produktmasterdaten, wobei der fehlende Verkaufsanteil eine verlorene Leistung jedes des einen oder der mehreren vordefinierten Attributwerte eines oder mehrerer Produkte angibt und der fehlende Verkaufsanteil eine verlorene Leistung in Bezug auf eine Nichtverfügbarkeit des Bestands für einen vordefinierten Zeitraum bereitstellt;

Bestimmen eines erwarteten Anteils jedes des einen oder der mehreren vordefinierten Attributwerte basierend auf einer Summe des erwarteten Anteils eines oder mehrerer Produkte mit dem einen oder den mehreren Attributwerten unter Verwendung eines multiplikativen Modells;

Berechnen eines zusätzlichen Anteils jedes des einen oder der mehreren vordefinierten Attributwerte basierend auf dem bestimmten tatsächlichen Verkaufsanteil und dem erwarteten Verkaufsanteil jedes des einen oder der mehreren vordefinierten Attributwerte, wobei der zusätzliche Anteil jedes des einen oder der mehreren Attributwerte auf einer Nachfrageübertragung von mindestens einem verpassten Attributwert eines oder mehrerer vordefinierter Attributwerte basiert;

Berechnen einer Nachfrageübertragung des einen oder der mehreren vordefinierten Attributwerte basierend auf dem berechneten zusätzlichen Anteil und dem fehlenden Verkaufsanteil, wobei die Nachfrageübertragung jedes des einen oder der mehreren vordefinierten Attributwerte von dem fehlenden Verkaufsanteil abhängt, wobei die Nachfrageübertragung berechnet wird durch:

$$\delta Y_{ikt} = \sum_{i \neq j}^{n} \beta_{ij} \delta Y_{jkt} + e_{ikt}$$

wobei $\delta Y_{ikt}$ ein zusätzlicher Anteil des Attributwerts $i \in \{1, 2, .... N\}$ für einen Laden $k \in \{1, 2, .... K\}$ an einem Tag $t \in \{1, 2, .... T\}$ ist,

$\beta_{ij}$ der Nachfrageübertragungswert des Attributwerts $i$ ist, der von dem Attributwert $j$ kommt,

$\delta Y_{jkt}$ der Anteil des Attributwerts $j \in \{1, 2, .... N$ und $i \neq j\}$ ist, der für den Laden $k \in \{1, 2, .... K\}$ an dem Tag $t \in \{1, 2, .... T\}$ fehlt, und

$e_{ikt}$ ein Fehler ist, der mit dem Attributwert $i \in \{1, 2, .... N\}$ für den Laden $k \in \{1, 2, .... K\}$ an dem Tag $t \in \{1, 2, .... T\}$ verbunden ist; und

Schätzen einer Nachfrageübertragung jedes des einen oder der mehreren Produkte basierend auf der berechneten Nachfrageübertragung jedes des einen oder der mehreren vordefinierten Attributwerte, wobei die Nachfrageübertragung jedes des einen oder der mehreren Produkte berechnet wird durch:

$$D_{xy} = \prod_{k=1}^{m} \beta_{ijm}$$

wobei $D_{xy}$ der Nachfrageübertragungswert des Produkts $x$ ist, der von dem Produkt y kommt,

$\beta_{ijm}$ der Nachfrageübertragungswert des Attributwerts $i$ ist, der von dem Attributwert $j$ des Attributs m $\in \{1, 2, .... M\}$ kommt, und

wobei die Nachfrageübertragung jedes des einen oder der mehreren Produkte basierend auf den Attributwerten abgeleitet wird, die in zwei substituierbaren Produkten vorhanden sind.

## Revendications

1. Procédé mis en œuvre par processeur (200) pour estimer un transfert de demande d'un ou plusieurs produits, comprenant :

la réception (202), par l'intermédiaire d'un ou plusieurs processeurs matériels, d'une pluralité de données se rapportant aux un ou plusieurs produits à partir d'une ou plusieurs sources prédéfinies, dans lequel chacun des un ou plusieurs produits comprend un ou plusieurs attributs et une valeur prédéfinie correspondant à chacun des un ou plusieurs attributs, dans lequel la pluralité de données inclut des données de vente historiques à partir d'un point de vente, des données d'inventaire historiques d'un ou plusieurs produits, et des données principales de produit, dans lequel une base de données de point de vente, POS, comprend des informations de niveau de transaction, est traitée et agrégée à un niveau de jour ou à un niveau de semaine en fonction d'une vitesse des un ou plusieurs produits vendus ;

l'agrégation (204), par l'intermédiaire d'un ou plusieurs processeurs matériels, des données de vente historiques et des données d'inventaire historiques de chacun des un ou plusieurs produits, dans lequel les données de vente historiques agrégées sont normalisées sur la base d'une unité prédéfinie et d'une période de temps, dans lequel l'agrégation des données de vente historiques permet l'identification d'un comportement d'achat d'un ou plusieurs clients sur la base d'une disponibilité d'inventaire ;

la détermination (206), par l'intermédiaire d'un ou plusieurs processeurs matériels, d'une part réelle de ventes de chacune des une ou plusieurs valeurs d'attribut prédéfinies à partir des données de vente historiques agrégées, des données d'inventaire historiques de chacun des un ou plusieurs produits et des données principales de produit, dans lequel la part réelle de ventes indique des performances de chacune d'une ou plusieurs valeurs d'attribut prédéfinies d'un ou plusieurs produits ;

la détermination (208), par l'intermédiaire d'un ou plusieurs processeurs matériels, d'une part manquante de ventes d'au moins une valeur d'attribut manquante des une ou plusieurs valeurs d'attribut prédéfinies à partir des données de vente historiques agrégées, des données d'inventaire historiques de chacun des un ou plusieurs produits et des données principales de produit, dans lequel la part manquante de ventes indique une performance perdue de chacune d'une ou plusieurs valeurs d'attribut prédéfinies d'un ou plusieurs produits, et la part manquante des ventes fournit une performance perdue par rapport à une indisponibilité d'inventaire pendant une période de temps prédéfinie ;

la détermination (210), par l'intermédiaire d'un ou plusieurs processeurs matériels, d'une part attendue de chacune des une ou plusieurs valeurs d'attribut prédéfinies sur la base d'une somme de parts attendues d'un ou plusieurs produits ayant les une ou plusieurs valeurs d'attribut en utilisant un modèle multiplicatif ;

le calcul (212), par l'intermédiaire d'un ou plusieurs processeurs matériels, d'une part supplémentaire de chacune des une ou plusieurs valeurs d'attribut prédéfinies sur la base de la part réelle déterminée de ventes et de la part attendue de ventes de chacune des une ou plusieurs valeurs d'attribut prédéfinies, dans lequel la part supplémentaire de chacune des une ou plusieurs valeurs d'attribut est basée sur un transfert de demande à partir d'au moins une valeur d'attribut manquée d'une ou plusieurs valeurs d'attribut prédéfinies ;

le calcul (214), par l'intermédiaire d'un ou plusieurs processeurs matériels, d'un transfert de demande des une ou plusieurs valeurs d'attribut prédéfinies sur la base de la part supplémentaire calculée et de la part manquante de ventes, dans lequel le transfert de demande de chacune des une ou plusieurs valeurs d'attribut prédéfinies dépend de la part manquante de ventes, dans lequel le transfert de demande est calculé par :

$$\delta Y_{ikt} = \sum_{i \neq j}^{n} \beta_{ij} \delta Y_{jkt} + e_{ikt}$$

dans lequel $\delta Y_{ikt}$ est une part supplémentaire de valeur d'attribut $i \in \{1, 2, .... N\}$ pour un magasin $k \in \{1, 2, .... K\}$ dans un jour $t \in \{1, 2, .... T\}$,

$\beta_{ij}$ est la valeur de transfert de demande de valeur d'attribut $i$ qui provient de la valeur d'attribut $j$,

$\delta Y_{jkt}$ est la part de valeur d'attribut $j \in \{1, 2, .... N$ et $i \neq j\}$ qui est manquante pour le magasin $k \in \{1, 2, .... K\}$ dans le jour $t \in \{1, 2, .... T\}$, et

$e_{ikt}$ est une erreur associée à la valeur d'attribut $i \in \{1, 2, .... N\}$ pour le magasin $k \in \{1, 2, .... K\}$ dans le jour $t \in \{1, 2, .... T\}$ ; et

l'estimation (216), par l'intermédiaire d'un ou plusieurs processeurs matériels, d'un transfert de demande de chacun des un ou plusieurs produits sur la base du transfert de demande calculé de chacune des une ou plusieurs valeurs d'attribut prédéfinies, dans lequel le transfert de demande de chacun des un ou plusieurs produits est calculé par :

$$D_{xy} = \prod_{k=1}^{m} \beta_{ijm}$$

dans lequel $D_{xy}$ est la valeur de transfert de demande du produit $x$ qui provient du produit $y$,

$\beta_{ijm}$ est la valeur de transfert de demande de la valeur d'attribut $i$ qui provient de la valeur d'attribut $j$ de l'attribut m ∈ {1, 2, .... M}, et

dans lequel le transfert de demande de chacun des un ou plusieurs produits est dérivé sur la base des valeurs d'attribut présentes dans deux produits substituables.

2. Procédé mis en œuvre par processeur (200) selon la revendication 1, dans lequel les une ou plusieurs sources prédéfinies incluent une base de données d'inventaire, la base de données POS, et une base de données principale de produits.

3. Procédé mis en œuvre par processeur (200) selon la revendication 1, dans lequel les un ou plusieurs attributs incluent la marque et la couleur des un ou plusieurs produits.

4. Procédé mis en œuvre par processeur (200) selon la revendication 1, dans lequel la part réelle des ventes des un ou plusieurs produits dépend d'une ou plusieurs valeurs d'attribut prédéfinies détenues par chacun des un ou plusieurs produits.

5. Système (100) pour estimer un transfert de demande d'un ou plusieurs produits comprenant :

au moins une mémoire (102) stockant des instructions ; et
un ou plusieurs processeurs matériels (104) couplés à la mémoire par l'intermédiaire des une ou plusieurs interfaces de communication, dans lequel les un ou plusieurs processeurs matériels sont configurés par les instructions pour exécuter un ou plusieurs modules :
un module de réception (106) configuré pour recevoir une pluralité de données se rapportant aux un ou plusieurs produits à partir d'une ou plusieurs sources prédéfinies, dans lequel chacun des un ou plusieurs produits comprend un ou plusieurs attributs et une valeur prédéfinie correspondant à chacun des un ou plusieurs attributs, dans lequel la pluralité de données inclut des données de vente historiques à partir d'un point de vente, des données d'inventaire historiques d'un ou plusieurs produits et des données principales de produit, dans lequel une base de données de point de vente, POS, comprend des informations de niveau de transaction, est traitée et agrégée à un niveau de jour ou à un niveau de semaine en fonction d'une vitesse des un ou plusieurs produits vendus ;
un module d'agrégation (108) configuré pour agréger les données de vente historiques et les données d'inventaire historiques de chacun des un ou plusieurs produits, dans lequel les données de vente historiques agrégées sont normalisées sur la base d'une unité prédéfinie et d'une période de temps, dans lequel l'agrégation des données de vente historiques permet l'identification d'un comportement d'achat d'un ou plusieurs clients sur la base d'une disponibilité d'inventaire ;
un module de détermination de part réelle (110) configuré pour déterminer une part réelle de ventes de chacune des une ou plusieurs valeurs d'attribut prédéfinies à partir des données de vente historiques agrégées, des données d'inventaire historiques de chacun des un ou plusieurs produits et des données principales de produit, dans lequel la part réelle de ventes indique des performances passées de chacune d'une ou plusieurs valeurs d'attribut prédéfinies d'un ou plusieurs produits ;
un module de détermination de part manquante (112) configuré pour déterminer une part manquante de ventes d'au moins une valeur d'attribut manquante des une ou plusieurs valeurs d'attribut prédéfinies à partir des données de vente historiques agrégées, des données d'inventaire historiques de chacun des un ou plusieurs produits et des données principales de produit, dans lequel la part manquante de ventes indique une performance perdue de chacune d'une ou plusieurs valeurs d'attribut prédéfinies d'un ou plusieurs produits, et la part manquante des ventes fournit une performance perdue par rapport à une indisponibilité d'inventaire pendant une période de temps prédéfinie ;
un module de détermination de part attendue (114) configuré pour déterminer une part attendue de chacune des une ou plusieurs valeurs d'attribut prédéfinies sur la base d'une somme de parts attendues d'un ou plusieurs produits ayant les une ou plusieurs valeurs d'attribut en utilisant un modèle multiplicatif ;
un module de calcul de part supplémentaire (116) configuré pour calculer une part supplémentaire de chacune des une ou plusieurs valeurs d'attribut prédéfinies sur la base de la part réelle déterminée de ventes et de la part attendue de ventes de chacune des une ou plusieurs valeurs d'attribut prédéfinies, dans lequel la part supplémentaire de chacune des une ou plusieurs valeurs d'attribut est basée sur un transfert de demande à partir d'au moins une valeur d'attribut manquée d'une ou plusieurs valeurs d'attribut prédéfinies ;
un module de calcul (118) configuré pour calculer un transfert de demande des une ou plusieurs valeurs d'attribut prédéfinies sur la base de la part supplémentaire calculée et de la part manquante de ventes, dans lequel le transfert de demande de chacune des une ou plusieurs valeurs d'attribut prédéfinies dépend de la part manquante de ventes, dans lequel le transfert de demande est calculé par :

$$\delta Y_{ikt} = \sum_{i \neq j}^{n} \beta_{ij} \delta Y_{jkt} + e_{ikt}$$

dans lequel $\delta Y_{ikt}$ est une part supplémentaire de valeur d'attribut $i \in \{1, 2, .... N\}$ pour un magasin $k \in \{1, 2, .... K\}$ dans un jour $t \in \{1, 2, .... T\}$,

$\beta_{ij}$ est la valeur de transfert de demande de valeur d'attribut $i$ qui provient de la valeur d'attribut $j$,

$\delta Y_{jkt}$ est la part de valeur d'attribut $j \in \{1, 2, .... N$ et $i \neq j\}$ qui est manquante pour le magasin $k \in \{1, 2, .... K\}$ dans le jour $t \in \{1, 2, .... T\}$, et

$e_{ikt}$ est une erreur associée à la valeur d'attribut $i \in \{1, 2, .... N\}$ pour le magasin $k \in \{1, 2, .... K\}$ dans le jour $t \in \{1, 2, .... T\}$ ; et un module d'estimation (120) configuré pour estimer un transfert de demande de chacun des un ou plusieurs produits sur la base du transfert de demande calculé de chacune des une ou plusieurs valeurs d'attribut prédéfinies, dans lequel le transfert de demande de chacun des un ou plusieurs produits est calculé par :

$$D_{xy} = \prod_{k=1}^{m} \beta_{ijm}$$

dans lequel $D_{xy}$ est la valeur de transfert de demande du produit $x$ qui provient du produit y,

$\beta_{ijm}$ est la valeur de transfert de demande de la valeur d'attribut $i$ qui provient de la valeur d'attribut $j$ de l'attribut m $\in \{1, 2, .... M\}$, et

dans lequel le transfert de demande de chacun des un ou plusieurs produits est dérivé sur la base des valeurs d'attribut présentes dans deux produits substituables.

6. Système (100) selon la revendication 5, dans lequel les une ou plusieurs sources prédéfinies incluent une base de données d'inventaire, la base de données POS, et une base de données principale de produits.

7. Système (100) selon la revendication 5, dans lequel les un ou plusieurs attributs incluent la marque et la couleur des un ou plusieurs produits.

8. Système (100) selon la revendication 5, dans lequel la part réelle des ventes des un ou plusieurs produits dépend d'une ou plusieurs valeurs d'attribut prédéfinies détenues par chacun des un ou plusieurs produits.

9. Support lisible par ordinateur non transitoire stockant une ou plusieurs instructions qui, lorsqu'elles sont exécutées par un ou plusieurs processeurs sur un système, amènent les un ou plusieurs processeurs à effectuer un procédé comprenant :

la réception d'une pluralité de données se rapportant aux un ou plusieurs produits à partir d'une ou plusieurs sources prédéfinies, dans lequel chacun des un ou plusieurs produits comprend un ou plusieurs attributs et une valeur prédéfinie correspondant à chacun des un ou plusieurs attributs, dans lequel la pluralité de données inclut des données de vente historiques à partir d'un point de vente, des données d'inventaire historiques d'un ou plusieurs produits et des données principales de produit, dans lequel une base de données de point de vente, POS, comprend des informations de niveau de transaction, est traitée et agrégée à un niveau de jour ou à un niveau de semaine en fonction d'une vitesse des un ou plusieurs produits vendus ;

l'agrégation des données de vente historiques et des données d'inventaire historiques de chacun des un ou plusieurs produits, dans lequel les données de vente historiques agrégées sont normalisées sur la base d'une unité prédéfinie et d'une période de temps, dans lequel l'agrégation des données de vente historiques permet l'identification d'un comportement d'achat d'un ou plusieurs clients sur la base d'une disponibilité d'inventaire ;

la détermination d'une part réelle de ventes de chacune des une ou plusieurs valeurs d'attribut prédéfinies à partir des données de vente historiques agrégées, des données d'inventaire historiques de chacun des un ou plusieurs produits et des données principales de produit, dans lequel la part réelle de ventes indique des performances de chacune d'une ou plusieurs valeurs d'attribut prédéfinies d'un ou plusieurs produits ;

la détermination d'une part manquante de ventes d'au moins une valeur d'attribut manquante des une ou plusieurs valeurs d'attribut prédéfinies à partir des données de vente historiques agrégées, des données d'inventaire historiques de chacun des un ou plusieurs produits et des données principales de produit, dans lequel la part manquante de ventes indique une performance perdue de chacune d'une ou plusieurs valeurs d'attribut prédéfinies d'un ou plusieurs produits, et la part manquante des ventes fournit une performance perdue par rapport à une indisponibilité d'inventaire pendant une période de temps prédéfinie ;

la détermination d'une part attendue de chacune des une ou plusieurs valeurs d'attribut prédéfinies sur la base d'une somme de parts attendues d'un ou plusieurs produits ayant les une ou plusieurs valeurs d'attribut en utilisant un modèle multiplicatif ;

le calcul d'une part supplémentaire de chacune des une ou plusieurs valeurs d'attribut prédéfinies sur la base de la part réelle déterminée de ventes et de la part attendue de ventes de chacune des une ou plusieurs valeurs d'attribut prédéfinies, dans lequel la part supplémentaire de chacune des une ou plusieurs valeurs d'attribut est basée sur un transfert de demande à partir d'au moins une valeur d'attribut manquée d'une ou plusieurs valeurs d'attribut prédéfinies ;

le calcul d'un transfert de demande des une ou plusieurs valeurs d'attribut prédéfinies sur la base de la part supplémentaire calculée et de la part manquante de ventes, dans lequel le transfert de demande de chacune des une ou plusieurs valeurs d'attribut prédéfinies dépend de la part manquante de ventes, dans lequel le transfert de demande est calculé par :

$$\delta Y_{ikt} = \sum_{i \neq j}^{n} \beta_{ij} \delta Y_{jkt} + e_{ikt}$$

dans lequel $\delta Y_{ikt}$ est une part supplémentaire de valeur d'attribut $i \in \{1, 2, .... N\}$ pour un magasin $k \in \{1, 2, .... K\}$ dans un jour $t \in \{1, 2, .... T\}$,

$\beta_{ij}$ est la valeur de transfert de demande de valeur d'attribut $i$ qui provient de la valeur d'attribut $j$,

$\delta Y_{jkt}$ est la part de valeur d'attribut $j \in \{1, 2, .... N$ et $i \neq j\}$ qui est manquante pour le magasin $k \in \{1, 2, .... K\}$ dans le jour $t \in \{1, 2, .... T\}$, et

$e_{ikt}$ est une erreur associée à la valeur d'attribut $i \in \{1, 2, .... N\}$ pour le magasin $k \in \{1, 2, .... K\}$ dans le jour $t \in \{1, 2, .... T\}$ ; et l'estimation d'un transfert de demande de chacun des un ou plusieurs produits sur la base du transfert de demande calculé de chacune des une ou plusieurs valeurs d'attribut prédéfinies, dans lequel le transfert de demande de chacun des un ou plusieurs produits est calculé par :

$$D_{xy} = \prod_{k=1}^{m} \beta_{ijm}$$

dans lequel $D_{xy}$ est la valeur de transfert de demande du produit $x$ qui provient du produit $y$,

$\beta_{ijm}$ est la valeur de transfert de demande de valeur d'attribut $i$ qui provient de la valeur d'attribut $j$ de l'attribut m $\in \{1, 2, .... M\}$, et

dans lequel le transfert de demande de chacun des un ou plusieurs produits est dérivé sur la base des valeurs d'attribut présentes dans deux produits substituables.

EP 3 879 479 B1

100

102

104

Processor(s)

| Memory |
| --- |
| Receiving Module — 106 |
| Aggregation Module — 108 |
| Actual Share Determination Module — 110 |
| Missing Share Determination Module — 112 |
| Expected Share Determination Module — 114 |
| Additional Share Determination Module — 116 |
| Computation Module — 118 |
| Estimation Module — 120 |

**FIG. 1**

200

Start

| Receiving plurality of data of products from one or more sources | 202 |

| Aggregating sales and inventory data of each product | 204 |

| Determining actual share of sales of each attribute value of products | 206 |

| Determining missing share of sales of each attribute value of products | 208 |

| Determining expected share of sales of each attribute value of products | 210 |

| Calculating additional share of sales of each attribute value of products | 212 |

| Computing a demand transfer of each attribute value of the products | 214 |

| Estimating a demand transfer of products based on the computed demand transfer of each attribute value of the products | 216 |

Stop

**FIG. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202021010411
- US 2020005340 A
- US 2019188536 A
- US 2019295032 A1
- US 2019087841 A1